(19) Europäisches Patentamt / European Patent Office / Office européen des brevets

(11) **EP 4 617 707 A1**

(12) **EUROPEAN PATENT APPLICATION**

(43) Date of publication:
17.09.2025 Bulletin 2025/38

(21) Application number: 25153295.8

(22) Date of filing: 22.01.2025

(51) International Patent Classification (IPC):
**G01S 7/03** *(2006.01)*      **G01S 7/292** *(2006.01)*
**G01S 13/02** *(2006.01)*      **G01S 13/18** *(2006.01)*
**G01S 13/58** *(2006.01)*      G01S 7/34 *(2006.01)*

(52) Cooperative Patent Classification (CPC):
**G01S 7/2921; G01S 7/038; G01S 7/2926;
G01S 13/0209; G01S 13/18; G01S 13/582;**
G01S 7/34

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 14.03.2024 IN 202441018498

(71) Applicant: **NXP B.V.**
**5656 AG Eindhoven (NL)**

(72) Inventors:
• **Sethuraman, Prasanna Kumar**
**5656AG Eindhoven (NL)**
• **Spreitzer, Robert**
**5656AG Eindhoven (NL)**

(74) Representative: **Colaiuda, Antonella**
**NXP Semiconductors Germany GmbH**
**Intellectual Property Group**
**Beiersdorfstraße 12**
**22529 Hamburg (DE)**

(54) **MULTI-TARGET DETECTION WITH ITERATIVE PULSE GATING IN ULTRA-WIDEBAND RADAR**

(57)     A method includes transmitting, with a transmitter, a first radar detection frame, and beginning a timer, at least in part based on the transmitting. The method also includes disabling a receiver, at least in part based on the transmitting. The method further includes enabling the receiver to receive a first radar detection response, at least in part based on the timer and a detection duration of a gating window of the receiver. In addition, the method includes receiving the first radar detection response with the receiver, the first radar detection response including a first reflection of a first target. The method additionally includes increasing the detection duration of the gating window, at least in part based on a determination that the first reflection of the first target was detected in the first radar detection response.

FIG. 6A

FIG. 6B

FIG. 6C

EP 4 617 707 A1

**Description**

**BACKGROUND**

**Technical Field**

This disclosure relates to determining a location by use of the reflection of radio waves and, in particular, to determining a location of multiple targets with iterative pulse gating.

**Related** Art

Currently, some pulse-gated radar range tracking systems use gating to track a single target and prevent that radar target from getting lost due to jamming.

Existing pulse radar systems detect multiple targets from one channel impulse response (CIR) measurement or range doppler map. This detection has limitations that depend on how tightly the system has been designed for a resolution requirement. Further, multiple target detections rely on signal processing approaches limited by noise and interference. If a conventional radar system includes pulse gating at the receiver, then that gating is only employed for gating the coupled path.

An ultra-wideband (UWB) modem can be used as an impulse radar, where a transmitter transmits a short duration pulse. A receiver then receives reflections of the pulse that are captured in the CIR measured by the receiver. In an ideal system, each reflection is limited to one range cell (also called as tap), and multiple reflections can be detected as long as they are separated by at least one tap. In a practical system, however, each pulse reflection at the receiver experiences a pulse spread due to the limited bandwidth of the receiver chain, and this spread results in a tail whose energy decays slowly across several taps. This then interferes with the pulse reflections at subsequent taps, limiting the multi-target detection capability of the receiver.

**BRIEF DESCRIPTION OF THE SEVERAL VIEWS OF THE DRAWINGS**

Fig. 1A shows an example of an UWB pulse radar system. Fig. 1B shows the delay between a transmission of a UWB signal to a target and a reception of a reflection of the signal reflected by a target.

Fig. 2A shows coupling between a transmitter and a co-located receiver in a UWB pulse radar system. Fig. 2B shows the impact of the coupling on a signal received by a receiver antenna.

Fig. 3 shows how a pulse gets spread over a number of taps as the signal of the coupled path and the reflected signal pass through RF filters of a receiver.

Fig. 4 shows how gating a receiver during the duration of the transmit pulse can produce a coherently combined pulse from a number of transmitted pulses.

Fig. 5 illustrates a difficulty in multi-target detection due to pulse spread for targets at increasing distances from the radar system.

Fig. 6A shows a first detection window, according to an implementation of the present disclosure. Fig. 6B shows a second detection window, according to an implementation of the present disclosure. Fig. 6C shows a third detection window, according to an implementation of the present disclosure.

Fig. 7 illustrates an algorithm for a radar system to perform multi-target detection with iterative pulse gating, according to an implementation of the present disclosure.

Fig. 8 illustrates an algorithm for a transmission of a radar frame and reception of a response to the radar frame, according to an implementation of the present disclosure.

Fig. 9 illustrates a radar system, according to an implementation of the present disclosure.

**DETAILED DESCRIPTION**

The present disclosure describes an iterative scanning approach for a radar system to detect multiple targets. A transmitter of the radar system first transmits a frame. Then, a receiver of the radar system detects a distance of a target closest to the radar system, based on a reflection of the frame. Subsequently, a gating window for the receiver (e.g., a duration for which the receiver is turned off) can be increased to cover a delay of the reflection. The radar system then can detect the next-closest target, and so on.

Various implementations of this approach can improve the detection performance of the radar system for multiple targets. In addition, some implementations can permit detection of closely spaced targets that would otherwise be difficult due to resolution limitations of the radar system.

The following foundational information forms a basis from which aspects of the present disclosure can be explained. Such information is offered for purposes of explanation only and, accordingly, should not be construed to limit the scope of the present disclosure, its potential applications, nor the claims.

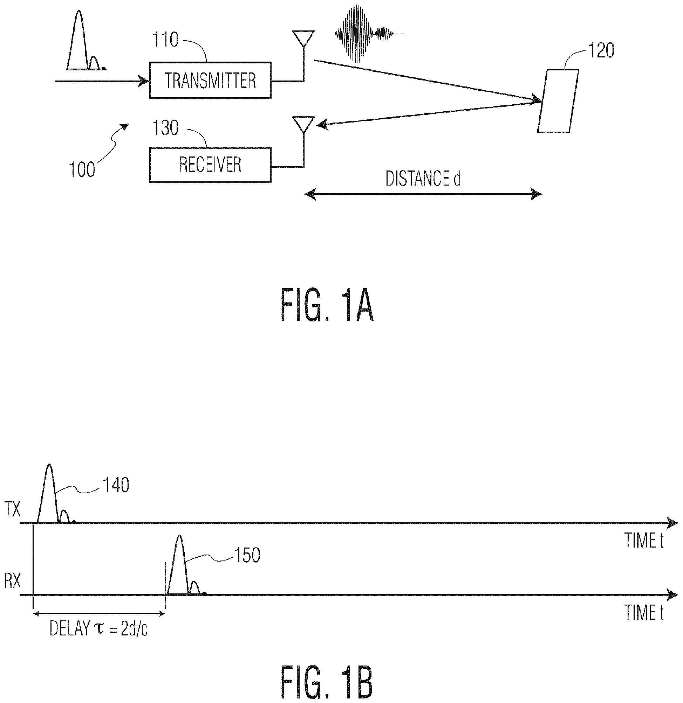

Fig. 1A shows an example of an UWB pulse radar system 100. As shown in Fig. 1A, the UWB pulse radar system 100 includes a transmitter 110 and a receiver 130 co-located with the transmitter 110. The transmitter 110 includes at least one transmitter antenna, and the receiver 130 includes at least one receiver antenna. In Fig. 1A, the transmitter 110 transmits a UWB signal that is reflected by a target 120 located a distance d from the transmitter 110 and the receiver 130. The reflection travels the distance d back to the receiver 130, which receives a signal corresponding to the reflection.

Fig. 1B shows the delay between the transmission of the UWB signal to the target 120 and the reception of the reflection by the receiver 130. As shown in Fig. 1B, the signal 150 received by the receiver 130 is delayed from a signal 140 transmitted by the transmitter 110 by a delay $\tau$. The delay $\tau$ can be calculated as

$$\tau = 2d/c \qquad \text{(Equation 1)}$$

where c is the speed of light.

The receiver 130 samples the signal 150 with a predetermined sampling rate. The period of time corresponding to the sampling rate (i.e., equal to the sampling interval) is a "tap." For example, for a receiver operating an analog-to-digital converter at a sampling rate of 1GHz, the sampling rate is 1ns. Thus, the duration of one tap is also 1ns.

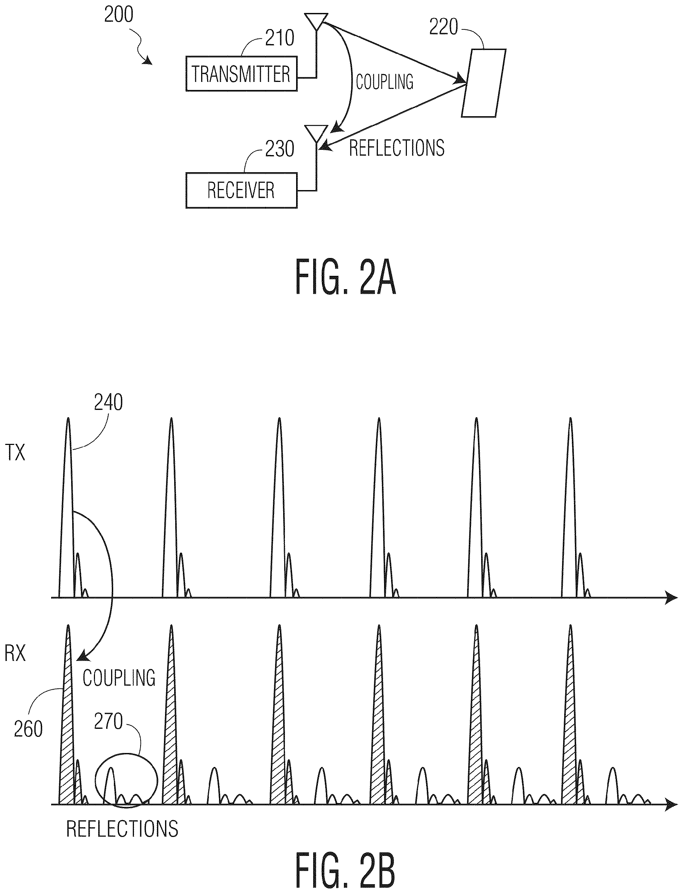

Fig. 2A shows coupling between a transmitter 210 and a co-located receiver 230 in a UWB pulse radar system 200. As shown in Fig. 2A, the transmitter 210 transmits signals for detecting a target 220. Because the receiver 230 is co-located with the transmitter 210, the receiver 230 quickly receives a lot of the power of the signals transmitted by the transmitter 210. This phenomenon is called "coupling."

After the transmitted signals are reflected by the target 220, the receiver 230 receives these reflections of the transmitted signals from the target 220.

Fig. 2B shows the impact of the coupling in the signals received by the receiver 230. In particular, as shown in Fig. 2B, the transmitter 210 transmits a signal 240. The receiver 230 receives a signal 260 corresponding to the signal 240 via the coupling. In addition, the receiver 230 receives a signal 270, corresponding to reflections of the transmitted signal 240 by the target 220. Because the signal 260 comes directly from the transmitter 210, the signal 260 does not have the delay associated with being reflected by the target 220. Thus, the signal 260 is received by the receiver 230 before the signal 270.

In addition, as shown in Fig. 2B, the signal 260 has more power than the signal 270.

In detecting the target 220, the radar system 200 evaluates the channel impulse response (CIR) to the signal 240. In particular, the radar system 200 can compute the received CIR by coherent integration of the transmitted pulses. The CIR can be modelled as

$$h(t, \tau) = h^{(s)}(\tau) + \rho e^{j2\pi f_d t} p(\tau - \tau_{tgt}) \qquad \text{(Equation 2)}.$$

The first term $h^{(s)}(\tau)$ is the signal of the coupled path and is assumed to be static. For example, it is assumed it does not change over time. The second term $\rho e^{j2\pi f_d t} p(\tau - \tau_{tgt})$ is the target reflection, which varies depending on the Doppler frequency $f_d$ of the target at the distance $d = (\tau_{tgt} c)/2$. The reflected signal amplitude is $\rho$, and the transmitted pulse is $\rho(\tau)$. $\tau_{tgt}$ is the delay corresponding to the distance of the target from the radar system 200.

In a common implementation, the channel impulse response has 128 taps. In various implementations, the channel impulse response has more or less than 128 taps. Thus, if a tap is 1ns, the channel impulse response has a duration of 128ns.

The signal 260 (e.g., from the coupled path) and the signal 260 (e.g., from the reflected signal) pass through radio frequency (RF) filters of the receiver 230. Accordingly, the pulse gets spread.

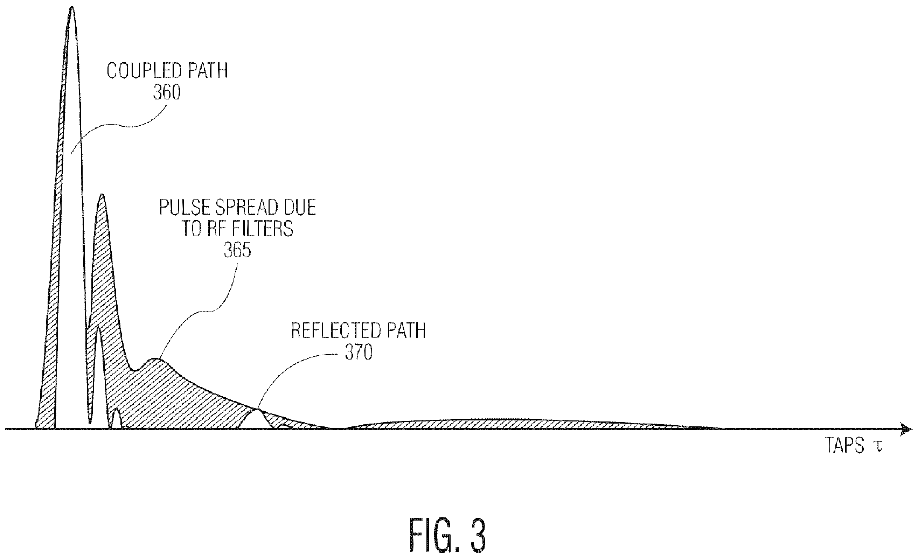

In particular, Fig. 3 shows how a pulse gets spread over a number of taps as the signal of the coupled path and the reflected signal pass through RF filters of the receiver 230. The numbers of taps corresponds to $\tau$. The signal received by the receiver 230 includes a signal 360 due to the coupled path from the transmitter 210. The received signal also includes a portion 365 resulting from the pulse spread due to the RF filters not being ideal. In addition, the received signal includes the reflected path 370 resulting from reflections 270 from the target 220.

Thus, a superposition of two signals results at any given delay $\tau$. For example, one signal of the superposition can be from the signal 360 of the coupled path, and another signal 370 can be from the target reflection.

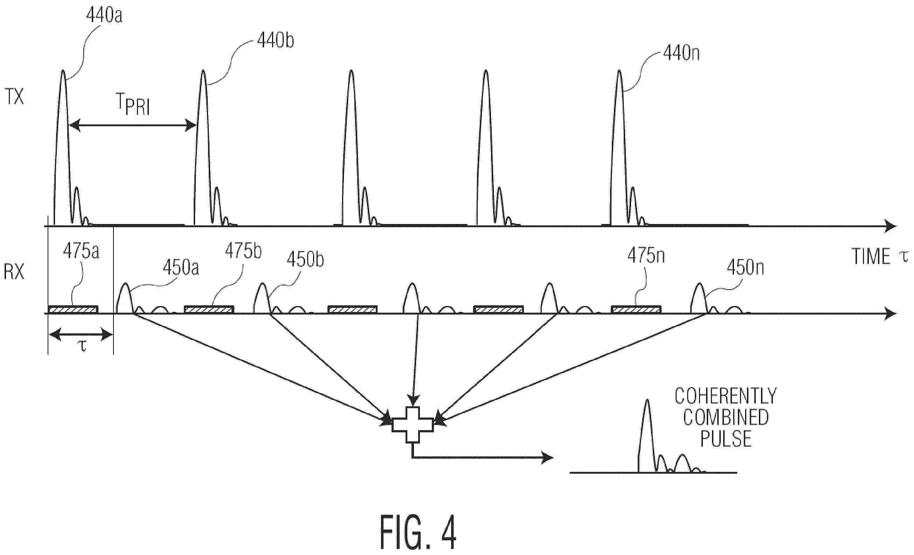

To mitigate the effect of the signal 360 of the coupled path, the receiver 230 can be turned off (e.g., "gated") during the duration of the transmit pulse. Fig. 4 shows how gating a receiver during a duration of a transmit pulse can produce a coherently combined pulse from a number n of transmitted pulses 440a, 440b, . . . 440n.

As shown in Fig. 4, the receiver 230 is turned off for a duration 475a during which the transmitter 210 transmits the pulse 440a. As a result, after a time $\tau$, the receiver 230 receives a reflected signal 450a from the target 220.

After a period of a pulse repetition interval ($T_{PRI}$), the transmitter 210 transmits the pulse 440b. The receiver 230 is turned off for a duration 475b, and the receiver 230 receives a reflected signal 450b from the target 220. These operations are repeated for transmission of pulse 440n, turn-off duration 475n, and reception of reflected signal 450n. The reflected signals 450a, 450b, . . . 450n can then be summed to produce the coherently combined pulse.

UWB radar systems can detect multiple targets, depending on pulses reflected from each target arriving at the receiver 230 at different delays. Thus, in this context, the pulse spread from the target reflections can be severely limiting.

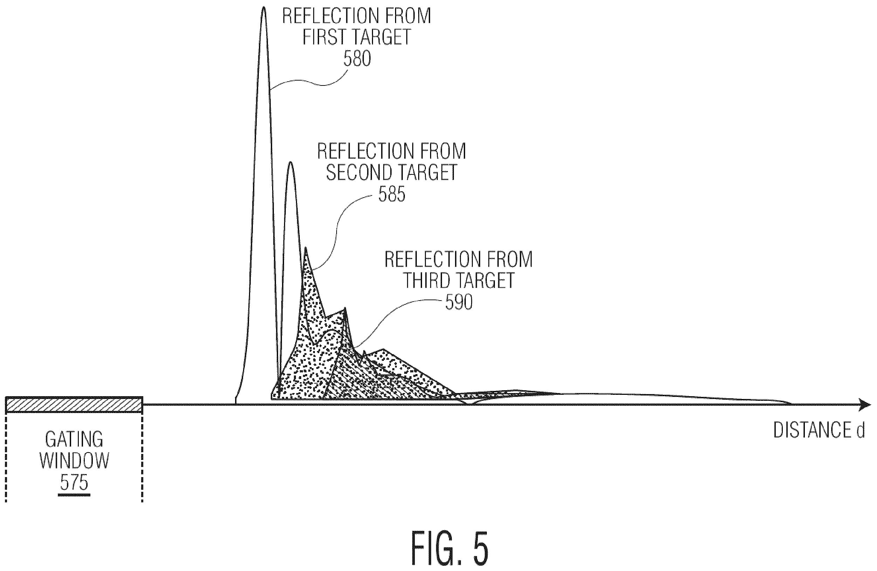

For example, Fig. 5 illustrates a difficulty in multi-target detection due to pulse spread for targets at increasing distances from the radar system 200. As shown in Fig. 5, the receiver 230 is turned off during a gating window 575. After the gating window, the receiver 230 first receives a reflection 580 from a first, closest target and then a reflection 585 from a second, next-closest target. Subsequently, the receiver 230 receives a reflection 590 from a third, most distant target. In Fig. 5, the reflection 580 has the greatest power, the reflection 585 has the next-greatest power, and the reflection 590 has the least power.

In particular, the pulse spread from the reflection 585 has less power than the pulse spread from the reflection 580. Thus, the reflection 585 of the more distant second target is shadowed by the energy decay of the reflection 580 of the closer first target. This shadowing can severely limit the multi-target detection capability of the radar system.

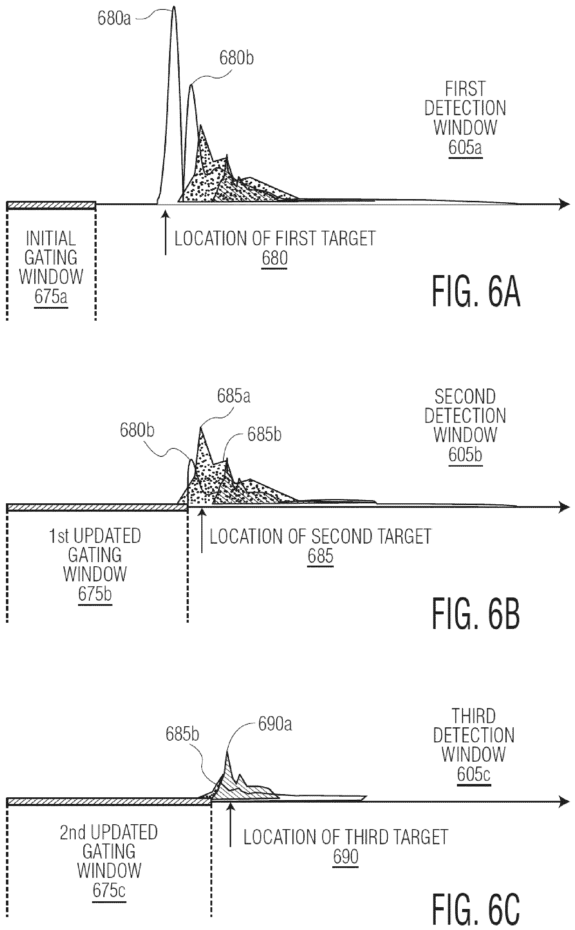

To potentially address this issue and others, various implementations of the present disclosure can use an iterative scanning approach, as shown in Figs. 6A, 6B, and 6C.

In particular, Fig. 6A shows a first detection window 605a, according to an implementation of the present disclosure. In the first detection window 605a, an initial gating window 675a is set to gate the receiver 230 for just the coupled path. Thus, the receiver can detect a first reflection 680a from a first target at a closest location 680. The radar system can also receive a second reflection 680b from the first target. The radar system can use the location 680 of the first target to determine a delay and to increase the duration of the initial gating window 675a based thereon. For example, a predetermined duration (e.g., corresponding to a predetermined number of taps) can be added to the delay to determine an adjusted duration for a first updated gating window 675b.

Fig. 6B shows a second detection window 605b, according to an implementation of the present disclosure. In the second detection window 605b, the receiver 230 is gated for the duration of the first updated gating window 675b. As shown in Fig. 6B, the first reflection 680a from the first target is not received in the CIR. Accordingly, the radar system can detect a first reflection 685a from a second target that is the next-closest target at a location 685. The radar system can also receive a second reflection 685b from the second target. This detection of the first and second reflections 685a, 685b from the second closest target otherwise might not have been possible due to the shadowing from the tail spread of the first reflection 680a of the first target.

The radar system can then use the location 685 of the second target to determine a corresponding delay and to increase the duration of the first updated gating window 675b based thereon. For example, a predetermined duration (e.g., corresponding to a predetermined number of taps) can be added to the delay to determine a duration for a second updated gating window 675c.

Fig. 6C shows a third detection window 605c, according to an implementation of the present disclosure. In the third detection window 605c, the process can be repeated for the second updated gating window 675c. Specifically, the first reflection 690a from the location 690 of the third closest target can now be detected by the radar system, because the first reflection 685a of the second target is no longer detected. The radar system also receives the second reflection 685b of the second closest target.

This process can be continued until targets are no longer detected. At this time, the duration of the gating window can be reset to the duration of the initial gating window 675a.

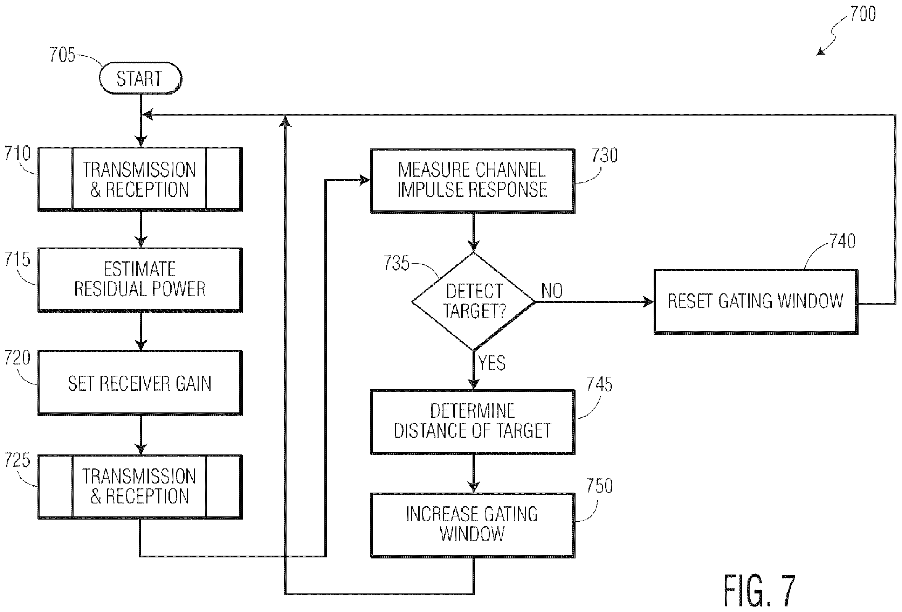

Fig. 7 illustrates an algorithm 700 for a radar system to perform multi-target detection with iterative pulse gating, according to an implementation of the present disclosure.

The algorithm 700 begins at 705, in which an initialization can be performed. For example, an initial receiver gain of a receiver antenna is set. In addition, an initial duration of a gating window for the receiver antenna can be set. The algorithm then advances to 710.

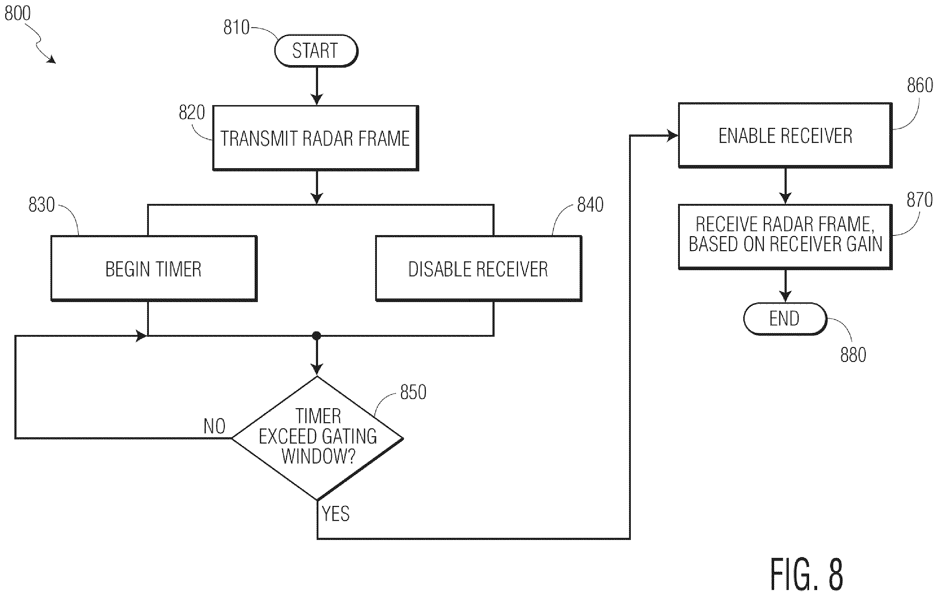

In 710, the radar system performs an operation for transmission of a radar initialization frame and a reception of a radar initialization response, as described later in connection with Fig. 8. The algorithm then advances to 715.

In 715, processing circuitry of the radar system estimates the residual power of the radar initialization response received in 870 of the transmission operation. A skilled artisan would understand how to program the processing circuitry to estimate the residual power of a received signal, such as the radar initialization response. The algorithm then advances to 720.

In 720, the processing circuitry sets the receiver gain of the receiver antenna, at least in part based on the residual power estimated in 715. The algorithm then advances to 725.

In 725, the radar system performs an operation for transmission of a radar detection frame and a reception of a radar detection response, as described later in connection with Fig. 8. The algorithm then advances to 730.

In 730, the processing circuitry measures the channel impulse response of the radar detection response received in 870. A skilled artisan would understand how to program the processing circuitry to measure the channel impulse response of the radar detection response, such as using Equation 2. The algorithm then advances to 735.

In 735, the processing circuitry determines whether a target was detected in the radar detection response, at least in part based on the channel impulse response measured in 730. If the processing circuitry determines in 735 that a target was not detected, the algorithm advances to 740. If the processing circuitry determines in 735 that a target was detected, the algorithm advances to 745.

In 740, the processing circuitry resets the gating window. In some implementations, the gating window can be reset to a previous value or its initial value. The gating window can also be modified to be other values. The algorithm then returns to 710.

Briefly returning to 735, if the processing circuitry determines a target was detected, the algorithm advances to 745. In 745, the processing circuitry determines (e.g., calculates) a distance from the receiver to the target detected in 735. This distance can be based on a delay from the transmission of the radar detection frame in 820 to the reception of the radar detection response in 870. In particular, the determination can be at least in part based on solving Equation 1 for the distance d. Thus, in some implementations, the processing circuitry can determine the location of the target. The algorithm then advances to 750.

In 750, the processing circuitry increases a duration of the gating window of the receiver antenna, at least in part based on the distance determined in 745. For example, the processing circuitry can determine an intermediate duration, at least in part based on solving Equation 1 for the delay $\tau$. Then, the gating window can be increased at least in part based on a sum of the intermediate duration and a predetermined duration (e.g., corresponding to a predetermined number of taps). In some implementations, the predetermined duration is equivalent to two taps. Thus, in at least one implementation, the predetermined duration can be 2ns. In an implementation directed to closely-spaced targets, the predetermined number of taps is one. The predetermined numbers of taps also can be three or more. In several implementations, the gating window is set equal to the sum of the intermediate duration and the predetermined number of taps. The algorithm then returns to 710.

Fig. 8 illustrates an algorithm for a transmission of a radar frame and reception of a response to the radar frame, according to an implementation of the present disclosure. The algorithm begins at 810, in which an initialization can be performed. For example, a timer can be reset. The algorithm then advances to 820.

In 820, a transmitter antenna of the radar system transmits a radar frame. When the transmitter antenna transmits a radar frame in operation 710, this radar frame can be considered a radar initialization frame. When the transmitter antenna transmits a radar frame in operation 725, this radar frame can be considered a radar detection frame. The algorithm can then advance to 830 and 840 in parallel.

In 830, the processing circuitry of the radar system begins the timer, at least in part based on the transmission of the radar frame in 820. For example, the timer can begin at the time of the transmission.

In 840, the processing circuitry disables the receiver antenna, at least in part based on the transmission of the radar frame in 820.

Upon completion of 830 and 840, the algorithm then advances to 850.

In 850, the processing circuitry determines whether the timer begun in 830 exceeds the duration of the gating window. If the processing circuitry determines the timer does not exceed the duration of the gating window, the algorithm returns to 850. On the other hand, if the processing circuitry determines the timer does exceed the duration of the gating window, the algorithm advances to 860.

In 860, the processing circuitry enables the receiver antenna to receive a reflection from the next target to be detected. The algorithm then advances to 870.

In 870, the receiver antenna enabled in 860 receives a radar response, at least in part based on the receiver gain. When the radar system has transmitted a radar detection frame in 820, this gain has been set in 720. Thus, the radar detection response can be effectively received.

The radar response includes the reflection from the next target to be detected. Thus, when the transmitter antenna has transmitted a radar initialization frame in 820, the reflection received by the receiver antenna can be considered a radar initialization response. The radar initialization response can include a reflection from the first, closest target, as shown in Fig. 6A, for example. When the transmitter antenna has transmitted a radar detection frame in 820, the reflection received by the receiver antenna can be considered a radar detection response.

The algorithm then concludes in 880.

As shown by returning to 710 from 750, the algorithm of Fig. 7 can proceed iteratively. Thus, in various implementations, the receiver gain can be increased as the gating window is increased, allowing for reflections from farther targets to experience additional gain.

Select implementations of the present disclosure can allow for detection and tracking of multiple targets in an UWB radar system. Conventionally, pulse reflections from different targets interfere with each other, rendering it difficult to perform the detection and tracking. The present disclosure can be applied to technologies such as breathing detection, person tracking, camera autofocus, etc.

Further, the teachings of the present disclosure are not limited to ultra-wideband. The multi-target detection with iterative pulse gating can be performed in other radio frequency technologies. Further, the teachings of the present disclosure can be applied to radar systems in which the transmitter and receiver are not co-located.

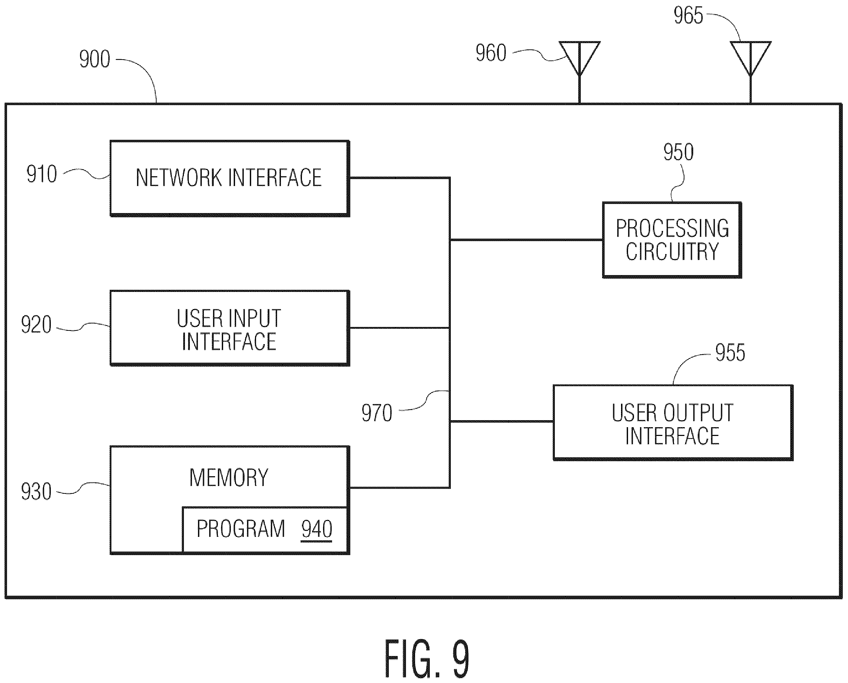

Fig. 9 illustrates a radar system 900, according to an implementation of the present disclosure. The transmitter 110, 210 and the receiver 130, 230 can be included in and/or implemented by the radar system 900.

The radar system 900 can include a network interface 910, a user input interface 920, a memory 930, a program 940, processing circuitry 950, a user output interface 955, a transmitter 960, a receiver 965, and a bus 970.

Although illustrated within a single housing, the radar system 900 can be distributed across plural housings or sub-systems that cooperate in executing program instructions. In some implementations, the radar system 900 can include one or more blade server devices, standalone server devices, personal computers (including desktop, laptop, and tablet computers), routers, hubs, switches, bridges, firewall devices, intrusion detection devices, mainframe computers, network-attached storage devices, smartphones and other mobile telephones, and other computing devices. The radar system 900 can execute the Windows OS, macOS, Android, or Linux in many implementations. The device hardware can be configured according to a Symmetric Multi-Processing (SMP) architecture or a Non-Uniform Memory Access (NUMA) architecture.

The network interface 910 can provide one or more communication connections and/or one or more devices that allow for communication between the radar system 900 and other computing systems (not shown). This communication can be performed over a communication network, collection of networks, or the air, to support the multi-target detection with iterative pulse gating, outlined herein. The network interface 910 can communicate using various networks (including both internal and external networks) such as near-field communications (NFC), Wi-Fi™, Bluetooth, Ethernet, cellular (e.g., 3G, 4G, 5G), white space, 802.11x, satellite, Bluetooth, LTE, GSM/HSPA, CDMA/EVDO, DSRC, CAN, GPS, facsimile, or any other wired or wireless interface. Other interfaces can include physical ports (e.g., Ethernet, USB, HDMI), interfaces for wired and wireless internal subsystems, and the like. Similarly, nodes and user equipment (e.g., mobile devices) of the system can also include suitable interfaces for receiving, transmitting, and/or otherwise communicating data or information in a network environment.

The user input interface 920 can receive one or more inputs from a human. The user input interface can be or include a mouse, a touchpad, a keyboard, a touchscreen, a trackball, a camera, a microphone, a joystick, a game controller, a scanner, a light pen, or any other input device.

The memory 930, also termed a "storage," can include or be one or more computer-readable storage media readable by the processing circuitry 950 and that store software. The memory 930 can be implemented as one storage device or across multiple co-located or distributed storage devices or sub-systems. The memory 930 can include additional elements, such as a controller, that communicate with the processing circuitry 950. The memory 930 can also include storage devices and/or sub-systems on which data and/or instructions are stored. The radar system 900 can access one or more storage resources to access information to carry out any of the processes indicated in this disclosure and, in particular, Figs. 7-8.

In various implementations, the memory 930 stores the program 940 to execute at least a portion of the algorithms illustrated in Figs. 7-8. Further, the program 940, when executed by the radar system 900 generally and/or the processing circuitry 950 specifically, can direct, among other functions, performance of the operations of multi-target detection with iterative pulse gating, as described herein.

The memory 930 can be or include a read-only memory (ROM), a programmable ROM (PROM), an erasable PROM (EPROM), an electrically erasable PROM (EEPROM), a random-access memory (RAM), a dynamic RAM (DRAM), a static RAM (SRAM), a field programmable gate array (FPGA), a hard drive, a cache memory, a flash memory, a removable disk, a tape reel, or any other memory. The memory 930 can be or include resistive RAM (RRAM) or a magneto-resistive RAM (MRAM). The information being tracked, sent, received, or stored in the memory 930can be provided in any database, register, table, cache, queue, control list, or storage structure, based on particular implementations, all of which could be referenced in any suitable timeframe.

The processing circuitry 950 can be or include one or more hardware processors and/or other circuitry that retrieve and execute software, especially the program 940, from the memory 930. The processing circuitry 950 can be implemented within one processing device, chip, or package and can also be distributed across multiple processing devices, chips, packages, or sub-systems that cooperate. In some implementations, the processing circuitry 950 is or includes a Graphics Processing Unit (GPU). The processing circuitry 950 is an example of a processing means.

The processing circuitry 950 can have any register size, such as a 32-bit register or a 64-bit register, among others. The processing circuitry 950 can include or interface with multiple processing cores. Implementations of the processing circuitry 950 are not limited to any particular number of threads. The processing circuitry 950 can be fabricated by any process technology, such as 14nm process technology.

The user output interface 955 can output information to a human user. The user output interface 955 can be or include a display (e.g., a screen), a touchscreen, speakers, headphones, a printer, or a haptic feedback unit. In many implementations, the user output interface 955 can be combined with the user input interface 920. For example, some such implementations include a touchscreen, a headset including headphones and a microphone, or a joystick with haptic feedback.

The transmitter 960 is or includes one or more transmitter antennas that transmit information across a wide bandwidth (> 500 MHz). The transmitter 960 is an example of transmitter 110, 210 and of a transmitting means.

The receiver 965 is or includes one or more receiver antennas that receive information across a wide bandwidth (> 500 MHz). The receiver 965 is an example of receiver 130, 230 and of a receiving means.

The transmitter 960 and the receiver 965 can send information to and receive information from the memory 930 and the processing circuitry 950 via the bus 970.

In implementations including multiple radar systems, a server or, in a serverless implementation, a peer can use one or more communications networks that facilitate communication among the radar systems to achieve the multi-target detection with iterative pulse gating, as outlined herein. For example, the one or more communications networks can include or be a local area network (LAN) or a wide area network (WAN) that facilitates communication among the radar systems. One or more direct communication links can be included between the radar systems. In addition, in some cases, the radar systems can be installed at geographically distributed locations. In other cases, the multiple radar systems can be installed at one geographic location.

As used herein, the terms "storage medium" or "computer-readable medium" can refer to a non-transitory storage medium, such as non-limiting examples of a hard drive, a memory chip, an ASIC, and cache memory. Those terms additionally can refer to transitory storage media, such as non-limiting examples of software, carrier waves, or propagating signals.

Aspects of the radar system can be implemented in various manners, e.g., as a method, a system, a computer program product, or one or more computer-readable storage media. Accordingly, aspects of the present disclosure can take the form of a hardware implementation or an implementation combining software and hardware aspects that can generally be referred to herein as a "module" or a "system." Functions described in this disclosure can be implemented as an algorithm executed by one or more hardware processing units, e.g., the processing circuitry 950. In various embodiments, different operations and portions of the operations of the algorithms described can be performed by different processing cores. In some implementations, the operations can be achieved by reciprocating software between a transmitter system and a receiver system. Furthermore, aspects of the present disclosure can take the form of one or more computer-readable media having computer-readable program code implemented, e.g., encoded or stored, thereon. In various implementations, such a computer program can, for example, be downloaded to or updated on existing devices and systems or be stored upon manufacture of these devices and systems.

Any suitable permutation can be applied to a physical implementation, including the design of a communications network in which the system is implemented. In one embodiment, the bus 970 can share hardware resources with the memory 930 and the processing circuitry 950. In this alternative implementation, the radar system 900 be provided with separate hardware resources including one or more processing cores, transmitters, receivers, and memories.

In example implementations, various other components of the radar system 900 can be installed in different physical areas or can be installed as single units.

The radar system 900 can be configured to facilitate communication with machine devices (e.g., vehicle sensors, instruments, electronic control units (ECUs), embedded devices, actuators, displays) through the bus 970. Other suitable communication interfaces can also be provided for an Internet Protocol (IP) network, a user datagram protocol (UDP) network, or any other protocol or communication architecture enabling network communication with machine devices.

The innovations in this detailed description can be implemented in a multitude of different ways, for example, as defined and covered by the claims and/or select examples. In the description, reference is made to the drawings where like reference numerals can indicate identical or functionally similar elements. Elements illustrated in the drawings are not necessarily drawn to scale. Additionally, certain implementations can include more elements than illustrated in a drawing and/or a subset of the elements illustrated in a drawing. Further, some implementations can incorporate a suitable combination of features from two or more drawings.

The disclosure describes various illustrative implementations and examples for implementing the features and functionality thereof. The components, arrangements, and/or features are described in connection with various implementations and are merely examples to simplify the present disclosure and are not intended to be limiting. In the development of actual implementations, implementation-specific decisions can be made to achieve specific goals, including compliance with system, business, and/or legal constraints that might vary from one implementation to another. Additionally, while such a development effort might be complex and time-consuming, it would be a routine undertaking for those of ordinary skill in the art having the benefit of this disclosure.

The systems, methods and devices of this disclosure have several innovative aspects, no one of which is solely responsible for all of the attributes disclosed herein. Some objects or advantages might not be achieved by implementations described herein. Thus, for example, certain implementations can operate in a manner that achieves or optimizes one advantage or group of advantages as taught or suggested herein and not other objects or advantages as taught or suggested herein.

In one example implementation, electrical circuits of the drawings can be implemented on a board of an associated electronic device. The board can be a general circuit board that can hold various components of the internal electronic system of the electronic device and, further, provide connectors for other peripherals. More specifically, the board can provide the electrical connections by which other components of the system can communicate electrically. Any cores (inclusive of digital signal processors, microprocessors, supporting chipsets) and computer-readable, non-transitory memory elements can be coupled to the board based on configurations, processing demands, and computer designs. Other components such as external storage, additional sensors, controllers for audio/video display, and peripheral devices can be attached to the board as plug-in cards, via cables, or integrated into the board itself. In various implementations, some functionalities described herein can be implemented in emulation form as software or firmware running within one or more configurable (e.g., programmable) elements arranged in a hardware structure that supports these functions. A non-transitory, computer-readable storage medium can include instructions to allow one or more processing cores to carry out the emulation.

In another example implementation, the electrical circuits of the drawings can be implemented as stand-alone modules (e.g., a device with associated components and circuitry configured to perform a specific application or function) or implemented as plug-in modules into application-specific hardware of electronic devices. Implementations of the present disclosure can be readily included in a system-on-chip (SOC) package. An SOC represents an integrated circuit (IC) that integrates components of a computer or other electronic system into one chip. The SOC can contain digital, analog, mixed-signal, and often radio frequency functions on one chip substrate. Other implementations can include a multi-chip-module (MCM) with a plurality of separate ICs located within one electronic package and that interact through the electronic package. In various other implementations, one or more silicon processing cores can be implemented in Application Specific Integrated Circuits (ASICs), Field Programmable Gate Arrays (FPGAs), programmable array logic (PAL), generic array logic (GAL), and other semiconductor chips.

The specifications, dimensions, and relationships outlined herein (e.g., the number of processing cores and logic operations) have been offered for non-limiting purposes of example and teaching. For example, various modifications and changes can be made to the arrangements of components. The description and drawings are, accordingly, to be regarded in an illustrative sense, not in a restrictive sense.

The numerous examples provided herein described interaction in terms of two, three, or more electrical components for purposes of clarity and example. The system can be consolidated in any manner. Along similar design alternatives, the illustrated components, modules, and elements of the drawings can be combined in various configurations within the scope of this disclosure. In certain cases, one or more of the functionalities of a given set of flows might be more clearly described by referencing a limited number of electrical elements. The electrical circuits of the drawings are readily scalable and can accommodate many components, as well as more complicated/sophisticated arrangements and configurations. Accordingly, the provided examples do not limit the scope or inhibit the teachings of the electrical circuits as potentially applied to a myriad of other architectures.

In this disclosure, references to various features (e.g., elements, structures, modules, components, operations, characteristics) included in "one implementation," "example implementation," "an implementation," "another implementation," "some implementations," "various implementations," "other implementations," "alternative implementation," and the like are intended to mean that any such features can be included in one or more implementations of the present disclosure and might or might not necessarily be combined in the same implementations. Some operations can be deleted or omitted where appropriate, or these operations can be modified or changed considerably. In addition, the timing of these operations can be altered considerably. The preceding operational flows have been offered for purposes of example and discussion. Implementations described herein provide flexibility in that any arrangement, chronologies, configurations, and timing mechanisms can be provided.

## Examples

In Example M1, a method includes transmitting, with a transmitter, a first radar detection frame; beginning a timer, at least in part based on the transmitting; disabling a receiver, at least in part based on the transmitting; enabling the receiver to receive a first radar detection response, at least in part based on the timer and a detection duration of a gating window of the receiver; receiving the first radar detection response with the receiver, the first radar detection response including a first reflection of a first target; and increasing the detection duration of the gating window, at least in part based on a determination that the first reflection of the first target was detected in the first radar detection response.

Example M2 is the method of Example M1, further comprising: measuring a channel impulse response, at least in part based on the first radar detection response, wherein the determination is at least in part based on the channel impulse response.

Example M3 is the method of any of Examples M1-M2, further comprising: determining a distance of the first target from the transmitter or the receiver, wherein the detection duration of the gating window is increased at least in part based on the distance of the first target.

Example M4 is the method of Example M3, wherein the detection duration of the gating window is increased, at least in part based on a sum of a duration corresponding to the distance of the first target and a predetermined number of taps of the receiver.

Example M5 is the method of Example M3, further comprising: transmitting, with the transmitter, a radar initialization frame after transmitting the first radar detection frame; enabling the receiver to receive a radar initialization response to the radar initialization frame, at least in part based on the increased detection duration of the gating window; and receiving, with the receiver, the radar initialization response, the radar initialization response excluding the first reflection of the first target.

Example M6 is the method of any of Examples M1-M5, further comprising: resetting the detection duration of the gating window to an initial duration of the gating window, at least in part based on a determination that a reflection of a target was not detected in a radar detection response.

Example M7 is the method of any of Examples M1-M6, further comprising: transmitting, with the transmitter, a radar initialization frame; beginning the timer, at least in part based on the transmitting the radar initialization frame; disabling the receiver, at least in part based on the transmitting the radar initialization frame; enabling the receiver, at least in part based on the timer and an initial duration of the gating window; receiving, with the receiver, a radar initialization response to the radar initialization frame; estimating a residual power, at least in part based on the radar initialization response; setting a receiver gain for the receiver, at least in part based on the residual power, wherein the first radar detection response is received at least in part based on the receiver gain; and resetting the timer.

Example M8 is the method of any of Examples M1-M7, further comprising: transmitting, with the transmitter, a second radar detection frame; enabling the receiver to receive a second radar detection response, at least in part based on the increased detection duration of the gating window; receiving the second radar detection response with the receiver, the second radar detection response including a first reflection of a second target; and determining that the first reflection of the second target was detected in the second radar detection response.

Example M9 is the method of any of Examples M1-M8, further comprising: transmitting, with the transmitter, a second radar detection frame after the transmitting the first radar detection frame; and enabling the receiver to receive a second radar detection response, at least in part based on the detection duration of the gating window, wherein the detection duration of the gating window is increased to avoid the first reflection of the first target in the second radar detection response.

Example M10 is the method of Example M9, wherein the first reflection of the first target is received in the first radar detection response before the first reflection of the second target is received in the first radar detection response.

Example M11 is the method of any of Examples M1-M10, wherein the transmitter is co-located with the receiver.

Example M12 is the method of any of Examples M1-M11, further comprising: transmitting a subsequent radar detection frame; enabling the receiver to receive a subsequent radar detection response, at least in part based on the increased detection duration of the gating window; and detecting a reflection of a second target in the subsequent radar detection response.

Example M13 is the method of any of Examples M1-M12, further comprising: performing a transmission of a subsequent radar detection frame; and enabling the receiver to receive a subsequent radar detection response, at least in part based on the increased detection duration of the gating window, wherein a first reflection of the target is not sensed in the subsequent radar detection response.

In Example A1, a radar system includes one or more transmitters that perform a transmission of a radar detection frame; and processing circuitry configured to begin a timer, at least in part based on the transmission, to disable a receiver, at least in part based on the transmission, to perform an enablement of the receiver to receive radar detection responses, at least in part based on the timer and a detection duration of a gating window of the receiver, and to increase the detection duration of the gating window, at least in part based on a determination that a target was detected in one of the radar detection responses.

Example A2 is the radar system of Example A1, wherein the processing circuitry is further configured to measure a channel impulse response, at least in part based on the one of the radar detection responses, and the determination is at least in part based on the channel impulse response.

Example A3 is the radar system of any of Examples A1-A2, wherein the processing circuitry is further configured to determine a distance of the target from the radar system and to increase the detection duration of the gating window at least in part based on the distance of the target.

Example A4 is the radar system of Example A3, wherein the processing circuitry is further configured to increase the detection duration of the gating window, at least in part based on a sum of a duration corresponding to the distance of the target and a predetermined number of taps of the radar system.

Example A5 is the radar system of Example A3, wherein the one or more transmitters transmit a radar initialization frame after transmitting the radar detection frame, the processing circuitry is further configured to enable the receiver to receive a radar initialization response to the radar initialization frame, at least in part based on the increased detection duration of the gating window, and the receiver receives the radar initialization response, the radar initialization response excluding a first reflection of the target.

Example A6 is the radar system of any of Examples A1-A5, wherein the processing circuitry is further configured to reset the detection duration of the gating window to an initial duration of the gating window, at least in part based on a determination that a target was not detected in one of the radar detection responses.

Example A7 is the radar system of any of Examples A1-A6, wherein the one or more transmitters perform a transmission of a radar initialization frame, the processing circuitry is further configured to begin the timer, at least in part based on the transmission of the radar initialization frame, to disable the receiver, at least in part based on the transmission of the radar initialization frame, and to enable the receiver, at least in part based on the timer and an initial duration of the gating window, the receiver receives a radar initialization response to the radar initialization frame, the processing circuitry is further configured to estimate a residual power, at least in part based on the radar initialization response, and to set a receiver gain for the receiver, at least in part based on the residual power, the receiver receives the one of the radar detection responses, at least in part based on the receiver gain, and the processing circuitry is further configured to reset the timer.

Example A8 is the radar system of any of Examples A1-A7, wherein the one or more transmitters transmit a second radar detection frame, the processing circuitry is further configured to enable the receiver to receive a second one of the radar detection responses, at least in part based on the increased detection duration of the gating window, the receiver receives the second one of the radar detection responses, the second one of the radar detection responses including a first reflection of a second target, and the processing circuitry determines that the first reflection of the second target was detected in the second one of the radar detection responses.

Example A9 is the radar system of any of Examples A1-A8, wherein the one or more transmitters transmit a second radar detection frame after the transmitting the radar detection frame, the processing circuitry is further configured to enable the receiver to receive a second one of the radar detection responses, at least in part based on the detection duration of the gating window, and the detection duration of the gating window is increased to avoid a first reflection of the target in the second one of the radar detection responses.

Example A10 is the radar system of Example A9, wherein the first reflection of the target is received in the one of the radar detection responses before a first reflection of a second target is received in the one of the radar detection responses.

Example A11 is the radar system of any of Examples A1-A10, wherein the one or more transmitters are co-located with the receiver.

Example A12 is the radar system of any of Examples A1-A11, wherein the one or more transmitters perform a transmission of a subsequent radar detection frame, the processing circuitry is further configured to enable the receiver to receive a subsequent radar detection response, at least in part based on the increased detection duration of the gating window, and the processing circuitry is further configured to detect a reflection of a second target in the subsequent radar detection response.

Example A13 is the radar system of any of Examples A1-A12, wherein the one or more transmitters perform a transmission of a subsequent radar detection frame, the processing circuitry is further configured to enable the receiver to receive a subsequent radar detection response, at least in part based on the increased detection duration of the gating window, and the processing circuitry does not sense a first reflection of the target in the subsequent radar detection response.

In Example C1, a computer-readable medium includes instructions that, when executed by processing circuitry, perform operations including beginning a timer, at least in part based on a transmission of a radar detection frame by a transmitter; disabling a receiver, at least in part based on the transmission; enabling the receiver, at least in part based on the timer and a detection duration of a gating window of the receiver, wherein a radar detection response is received by the receiver, at least in part based on the enabling; and increasing the detection duration of the gating window, at least in part based on a determination that a first reflection of a target was detected in the radar detection response.

Example C2 is the computer-readable medium of Example C1, the operations further comprising: measuring a channel impulse response, at least in part based on the radar detection response, wherein the determination is at least in part based on the channel impulse response.

Example C3 is the computer-readable medium of any of Examples C1-C2, the operations further comprising: determining a distance of the target from the transmitter or the receiver, wherein the detection duration of the gating window is increased at least in part based on the distance of the target.

Example C4 is the computer-readable medium of Example C3, wherein the detection duration of the gating window is increased, at least in part based on a sum of a duration corresponding to the distance of the target and a predetermined number of taps of the receiver.

Example C5 is the computer-readable medium of Example C3, the operations further comprising: enabling the receiver to receive a radar initialization response to a radar initialization frame, at least in part based on the increased detection duration of the gating window, wherein the transmitter transmits the radar initialization frame after transmitting the radar detection frame, and the receiver receives the radar initialization response, the radar initialization response excluding the first reflection of the target.

Example C6 is the computer-readable medium of any of Examples C1-C5, the operations further comprising: resetting the detection duration of the gating window to an initial duration of the gating window, at least in part based on a determination that a reflection of a target was not detected in a radar detection response.

Example C7 is the computer-readable medium of any of Examples C1-C6, the operations further comprising: beginning the timer, at least in part based on the transmitter transmitting a radar initialization frame; disabling the receiver, at least in part based on the transmitter transmitting the radar initialization frame; enabling the receiver, at least in part based on the timer and an initial duration of the gating window; estimating a residual power, at least in part based on a radar initialization response to the radar initialization frame, wherein the receiver receives the radar initialization response; setting a receiver gain for the receiver, at least in part based on the residual power, wherein the radar detection response is received at least in part based on the receiver gain; and resetting the timer.

Example C8 is the computer-readable medium of any of Examples C1-C7, the operations further comprising: enabling the receiver to receive a second radar detection response to a second radar detection frame, at least in part based on the increased detection duration of the gating window, wherein the transmitter transmits the second radar detection frame; and determining that a first reflection of a second target was detected in the second radar detection response, wherein the receiver receives the second radar detection response.

Example C9 is the computer-readable medium of any of Examples C1-C8, the operations further comprising: enabling the receiver to receive a second radar detection response to a second radar detection frame, at least in part based on the detection duration of the gating window, wherein the transmitter transmits the second radar detection frame after the transmitting the radar detection frame, and the detection duration of the gating window is increased to avoid the first reflection of the target in the second radar detection response.

Example C10 is the computer-readable medium of Example C9, wherein the first reflection of the target is received in the radar detection response before a first reflection of a second target is received in the radar detection response.

Example C11 is the computer-readable medium of any of Examples C1-C10, wherein the transmitter is co-located with the receiver.

Example C12 is the computer-readable medium of any of Examples C1-C11, the operations further comprising: enabling, at least in part based on the increased detection duration of the gating window, the receiver to receive a subsequent radar detection response to a subsequent radar detection frame, wherein the transmitter transmits the subsequent radar detection frame; and detecting a reflection of a second target in the subsequent radar detection response.

Example C13 is the computer-readable medium of any of Examples C1-C12, the operations further comprising: enabling the receiver to receive a subsequent radar detection response to a subsequent radar detection frame, at least in part based on the increased detection duration of the gating window, wherein the transmitter performs a transmission of the subsequent radar detection frame, and a first reflection of the target is not sensed in the subsequent radar detection response.

In Example F1, an apparatus includes transmitting means for performing a transmission of a first radar detection frame; processing means for beginning a timing means, at least in part based on the transmission of the first radar detection frame, for disabling a receiving means, at least in part based on the transmission of the first radar detection frame, and for enabling the receiving means to receive a first radar detection response, at least in part based on the timing means and a detection duration of a gating window of the receiving means; and the receiving means, which receive the first radar detection response, the first radar detection response including a first reflection of a first target; wherein the processing means increase the detection duration of the gating window, at least in part based on a determination that the first reflection of the first target was detected in the first radar detection response.

Example F2 is the apparatus of Example F1, wherein the processing means measure a channel impulse response, at least in part based on the first radar detection response, and the determination is at least in part based on the channel impulse response.

Example F3 is the apparatus of any of Examples F1-F2, wherein the processing means determines a distance of the first target from the transmitting means or the receiving means, and the detection duration of the gating window is increased at least in part based on the distance of the first target.

Example F4 is the apparatus of Example F3, wherein the detection duration of the gating window is increased, at least in part based on a sum of a duration corresponding to the distance of the first target and a predetermined number of taps of the receiving means.

Example F5 is the apparatus of Example F3, wherein the transmitting means transmit a radar initialization frame after transmitting the first radar detection frame, the processing means enable the receiving means to receive a radar initialization response to the radar initialization frame, at least in part based on the increased detection duration of the gating window, and the receiving means receive the radar initialization response, the radar initialization response excluding the first reflection of the first target.

Example F6 is the apparatus of any of Examples F1-F5, wherein the processing means reset the detection duration of the gating window to an initial duration of the gating window, at least in part based on a determination that a reflection of a target was not detected in a radar detection response.

Example F7 is the apparatus of any of Examples F1-F6, wherein the transmitting means perform a transmission of a radar initialization frame, the processing means begin the timing means, at least in part based on the transmission of the radar initialization frame, disable the receiving means, at least in part based on the transmission of the radar initialization frame, and enable the receiving means, at least in part based on the timing means and an initial duration of the gating window, the receiving means receive a radar initialization response to the radar initialization frame, the processing means estimate a residual power, at least in part based on the radar initialization response, and set a reception gain for the receiving means, at least in part based on the residual power, the first radar detection response is received at least in part based on the reception gain, and the processing means reset the timing means.

Example F8 is the apparatus of any of Examples F1-F7, wherein the transmitting means transmit a second radar detection frame, the processing means enable the receiving means to receive a second radar detection response, at least in part based on the increased detection duration of the gating window, the receiving means receive the second radar detection response, the second radar detection response including a first reflection of a second target, and the processing means determine that the first reflection of the second target was detected in the second radar detection response.

Example F9 is the apparatus of any of Examples F1-F8, wherein the transmitting means transmit a second radar detection frame after the transmission of the first radar detection frame, the processing means enable the receiving means to receive a second radar detection response, at least in part based on the detection duration of the gating window, and the detection duration of the gating window is increased to avoid the first reflection of the first target in the second radar detection response.

Example F10 is the apparatus of Example F9, wherein the first reflection of the first target is received in the first radar detection response before the first reflection of the second target is received in the first radar detection response.

Example F11 is the apparatus of any of Examples F1-F10, wherein the transmitting means is co-located with the receiving means.

Example F12 is the apparatus of any of Examples F1-F11, wherein the transmitting means transmit a subsequent radar detection frame, and the processing means enable the receiving means to receive a subsequent radar detection response, at least in part based on the increased detection duration of the gating window, and detect a reflection of a second target in the subsequent radar detection response.

Example F13 is the apparatus of any of Examples F1-F12, wherein the transmitting means transmit a subsequent radar detection frame, the processing means enable the receiving means to receive a subsequent radar detection response, at least in part based on the increased detection duration of the gating window, and a first reflection of the target is not sensed in the subsequent radar detection response.

**Claims**

1. A method, comprising:

   transmitting, with a transmitter, a first radar detection frame;
   beginning a timer, at least in part based on the transmitting;
   disabling a receiver, at least in part based on the transmitting;
   enabling the receiver to receive a first radar detection response, at least in part based on the timer and a detection duration of a gating window of the receiver;
   receiving the first radar detection response with the receiver, the first radar detection response including a first reflection of a first target; and
   increasing the detection duration of the gating window, at least in part based on a determination that the first reflection of the first target was detected in the first radar detection response.

2. The method of claim 1, further comprising:
   measuring a channel impulse response, at least in part based on the first radar detection response, wherein the determination is at least in part based on the channel impulse response.

3. The method of claim 1 or claim 2, further comprising:
   determining a distance of the first target from the transmitter or the receiver, wherein the detection duration of the gating window is increased at least in part based on the distance of the first target.

4. The method according to any preceding claim, wherein the detection duration of the gating window is increased, at least in part based on a sum of a duration corresponding to the distance of the first target and a predetermined number of taps of the receiver.

5. The method according to any preceding claim , further comprising:

   transmitting, with the transmitter, a radar initialization frame after transmitting the first radar detection frame;
   enabling the receiver to receive a radar initialization response to the radar initialization frame, at least in part based on the increased detection duration of the gating window; and
   receiving, with the receiver, the radar initialization response, the radar initialization response excluding the first reflection of the first target.

6. The method of according to any preceding claim , further comprising:
   resetting the detection duration of the gating window to an initial duration of the gating window, at least in part based on a determination that a reflection of a target was not detected in a radar detection response.

7. The method according to any preceding claim , wherein the first reflection of the first target is received in the first radar detection response before the first reflection of the second target is received in the first radar detection response.

8. A radar system, comprising:

   one or more transmitters that perform a transmission of a radar detection frame; and
   processing circuitry configured to begin a timer, at least in part based on the transmission, to disable a receiver, at least in part based on the transmission, to perform an enablement of the receiver to receive radar detection responses, at least in part based on the timer and a detection duration of a gating window of the receiver, and to increase the detection duration of the gating window, at least in part based on a determination that a target was detected in one of the radar detection responses.

9. The radar system of claim8, wherein the processing circuitry is further configured to measure a channel impulse response, at least in part based on the one of the radar detection responses, and the determination is at least in part based on the channel impulse response.

10. The radar system of claim 8 or claim 9, wherein the processing circuitry is further configured to determine a distance of the target from the radar system and to increase the detection duration of the gating window at least in part based on the distance of the target.

11. The radar system according to any of the claims 8 to 10, wherein the processing circuitry is further configured to increase the detection duration of the gating window, at least in part based on a sum of a duration corresponding to the distance of the target and a predetermined number of taps of the radar system.

12. The radar system according to any of the claims 8 to 11, wherein the processing circuitry is further configured to reset the detection duration of the gating window to an initial duration of the gating window, at least in part based on a determination that a target was not detected in one of the radar detection responses.

13. The radar system of according to any of the claims 8 to 12, wherein the one or more transmitters are co-located with the receiver.

14. A computer-readable medium including instructions that, when executed by processing circuitry, perform operations comprising:

   beginning a timer, at least in part based on a transmission of a radar detection frame by a transmitter;
   disabling a receiver, at least in part based on the transmission;
   enabling the receiver, at least in part based on the timer and a detection duration of a gating window of the receiver, wherein a radar detection response is received by the receiver, at least in part based on the enabling; and
   increasing the detection duration of the gating window, at least in part based on a determination that a first reflection of a target was detected in the radar detection response.

FIG. 1A

FIG. 1B

200

210

TRANSMITTER

220

COUPLING

REFLECTIONS

230

RECEIVER

# FIG. 2A

240

TX

COUPLING

260

270

RX

REFLECTIONS

# FIG. 2B

COUPLED PATH
360

PULSE SPREAD DUE
TO RF FILTERS
365

REFLECTED PATH
370

TAPS τ

FIG. 3

FIG. 4

EP 4 617 707 A1

REFLECTION FROM
FIRST TARGET
580

REFLECTION FROM
SECOND TARGET
585

REFLECTION FROM
THIRD TARGET
590

GATING
WINDOW
575

DISTANCE d

FIG. 5

680a

680b

FIRST
DETECTION
WINDOW
605a

INITIAL
GATING
WINDOW
675a

LOCATION OF FIRST TARGET
680

FIG. 6A

685a

680b

685b

SECOND
DETECTION
WINDOW
605b

1st UPDATED
GATING
WINDOW
675b

LOCATION OF SECOND TARGET
685

FIG. 6B

685b

690a

THIRD
DETECTION
WINDOW
605c

2nd UPDATED
GATING
WINDOW
675c

LOCATION OF THIRD TARGET
690

FIG. 6C

FIG. 7

FIG. 8

FIG. 9

EP 4 617 707 A1

Europäisches
Patentamt

European
Patent Office

Office européen
des brevets

# EUROPEAN SEARCH REPORT

**Application Number**

EP 25 15 3295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/058626 A1 (AUTOLIV ASP INC [US]) 6 April 2017 (2017-04-06) * paragraphs [0001], [0020] - [0023]; figure 1 * * paragraphs [0024] - [0026], [0028] - [0034]; figures 3,4 * | 1-14 | INV. G01S7/03 G01S7/292 G01S13/02 G01S13/18 G01S13/58 |
| X | US 2019/025417 A1 (PARK PIL JAE [KR] ET AL) 24 January 2019 (2019-01-24) * paragraphs [0003], [0004], [0056], [0066] - [0071]; figures 1,2,5 * | 1-14 | ADD. G01S7/34 |
| A | US 2020/319294 A1 (VA VUTHA [US] ET AL) 8 October 2020 (2020-10-08) * paragraph [0045]; figure 3 * | 1-14 | |
| A | US 2022/128678 A1 (ABDUL KAREEM ABDUL WAHID [US] ET AL) 28 April 2022 (2022-04-28) * paragraphs [0003], [0011], [0021]; figure 1 * | 1-14 | |

**TECHNICAL FIELDS SEARCHED (IPC)**

G01S

The present search report has been drawn up for all claims

| Place of search | Date of completion of the search | Examiner |
|---|---|---|
| Munich | 22 May 2025 | Schmelz, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 25 15 3295

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | Publication date | Patent family member(s) | | Publication date |
|---|---|---|---|---|
| WO 2017058626 A1 | 06-04-2017 | US | 2017090013 A1 | 30-03-2017 |
| | | WO | 2017058626 A1 | 06-04-2017 |
| US 2019025417 A1 | 24-01-2019 | NONE | | |
| US 2020319294 A1 | 08-10-2020 | CN | 113646657 A | 12-11-2021 |
| | | EP | 3903120 A1 | 03-11-2021 |
| | | KR | 20210137003 A | 17-11-2021 |
| | | US | 2020319294 A1 | 08-10-2020 |
| | | WO | 2020204358 A1 | 08-10-2020 |
| US 2022128678 A1 | 28-04-2022 | US | 2022128678 A1 | 28-04-2022 |
| | | US | 2023273307 A1 | 31-08-2023 |

EPO FORM P0459

For more details about this annex : see Official Journal of the European Patent Office, No. 12/82